# EUROPEAN PATENT APPLICATION

(11) **EP 4 738 537 A1**
(43) Date of publication of application: **06.05.2026**
(21) Application number: 25782805.3
(22) Date of filing: 11.03.2025
(51) Int. Cl.: H01M 10/617, H01M 50/507, H01M 50/509, H01M 50/503, H01M 10/44

(54) **BATTERY MODULE AND BATTERY DEVICE INCLUDING SAME**

(30) Priority: 03.04.2024 KR 20240045385; 06.03.2025 KR 20250029098
(71) Applicant: LG Energy Solution, Ltd., Seoul 07335 (KR)
(72) Inventor: JUNG, Hyunok, Daejeon 34122 (KR); KANG, Suwon, Daejeon 34122 (KR); CHUN, Yongho, Daejeon 34122 (KR)
(74) Representative: BCKIP Part mbB
(86) International application number: PCT/KR2025/003219
(87) International publication number: WO 2025/211602

(57) **Abstract**

The present invention provides a battery module and a battery device including same, the battery module being capable of minimizing temperature deviation for each location in the battery module by having heterogeneous battery cells arranged in the battery module on the basis of thermal characteristics of the heterogeneous battery cells. The battery module comprises: a first type of battery cells; and a second type of battery cells having thermal characteristics differing from those of the first type of battery cells, wherein the first type of battery cells and the second type of battery cells are irregularly and alternately arranged such that the difference in temperature for each location is minimized in the battery module on the basis of the thermal characteristics.

## Description

### [TECHNICAL FIELD]

This application claims the benefit of priority based on Korean Patent Application No. 10-2024-0045385 filed on April 3, 2024 and Korean Patent Application No. 10-2025-0029098 filed on March 6, 2025, the entire contents disclosed in the documents of the patent applications are incorporated by reference as a part of this specification.

The present invention relates to a battery module and a battery device including the same.

### [BACKGROUND ART]

Generally, secondary batteries are used as energy sources for mobile devices, electric vehicles, hybrid vehicles, electric bicycles, etc., and depending on the type of external device to which they are applied, secondary batteries are used in the form of a single battery or in the form of a module in which multiple batteries are connected and combined into one unit.

While small mobile devices such as mobile phones may operate for a certain period of time with the output and capacity of a single battery, a module form that includes multiple batteries is preferred due to issues with output and capacity in cases such as electric vehicles and hybrid vehicles with high power consumption that require long-term operation and high-power operation, and the output voltage or output current may be increased depending on the number of built-in batteries.

Meanwhile, technology development is underway to minimize the temperature deviation between secondary battery cells in battery devices in order to reduce the performance and lifespan deviation between secondary battery cells.

### [DISCLOSURE]

### [TECHNICAL PROBLEM]

It is an object of the present invention to provide a battery module and a battery device including the same capable of minimizing the temperature deviation according to locations within the battery module by arranging heterogeneous battery cells within the battery module based on the thermal characteristics thereof.

In addition, it is an object of the present invention to provide a battery module and a battery device including the same capable of reducing the performance and lifespan deviation between battery cells by connecting homogeneous battery cells among the battery cells arranged within the battery module and independently driving the heterogeneous battery cells.

In addition, it is an object of the present invention to provide a battery module and a battery device including the same capable of minimizing the thermal deviation between battery cells and the accumulation of heat at a specific location within the battery module.

The objects of the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

A battery module according to an embodiment of the present invention includes: first type battery cells; and second type battery cells having thermal characteristics different from thermal characteristics of the first type battery cells, wherein the first type battery cells and the second type battery cells are arranged irregularly and alternately based on the thermal characteristics such that temperature difference according to locations within the battery module is minimized.

A battery device according to an embodiment of the present invention includes: first to nth battery modules, wherein each of the first to nth battery modules is provided with first type battery cells and second type battery cells having thermal characteristics different from the first type battery cells, and the first type battery cells are electrically connected to each other independent from the second type battery cells and the second type battery cells are electrically connected to each other independent from the first type battery cells in the first to nth battery modules.

### [ADVANTAGEOUS EFFECTS]

According to the embodiments of the present invention, the temperature deviation according to locations within the battery module may be minimized by arranging heterogeneous battery cells within the battery module based on the thermal characteristics thereof.

In addition, by connecting homogeneous battery cells among the battery cells placed in the battery module and operating heterogeneous battery cells independently, the performance and lifespan deviations between battery cells may be reduced.

In addition, by minimizing the thermal deviation between battery cells, the accumulation of heat at a specific location within the battery module may be minimized.

In addition, the thermal distribution between battery cells may be uniform such that the thermal propagation between battery cells may be uniform.

In addition, by minimizing the temperature deviation according to locations within the battery module and minimizing the accumulation of heat at a specific location, the thermal runaway phenomenon of a specific battery cell may be prevented.

In addition, since the operating temperatures of the battery cells are similar such that the degradation tendencies thereof are similar, the characteristic deviations between battery cells over time may be minimized.

In addition, by electrically connecting homogeneous battery cells using "∪" and "∩" shaped bus bars, the double structure may be avoided when bus bars extend across heterogeneous battery cells, thereby avoiding space loss.

In addition, by avoiding connection in series between heterogeneous cells, energy loss due to variation between battery cells in a battery device may be minimized.

In addition, since heterogeneous battery cells with different operating voltage ranges or different energies may be electrically connected and utilized as a battery device, the available energy of the battery device may be maximized.

In addition to the advantageous effects described above, specific effects of the present invention will be described further while describing specific details of the present invention.

### [BRIEF DESCRIPTION OF DRAWINGS]

FIG. 1 illustrates an arrangement of heterogeneous battery cells in a battery module according to an embodiment of the present invention.
FIG. 2 illustrates a battery module operating based on B-type battery cells having operating range smaller than A-type battery cells.
FIG. 3 illustrates a battery module operating based on A-type battery cells having operating range greater than B-type battery cells.
FIG. 4 illustrates arrangement and electrical connection relationship of heterogeneous battery cells in a battery module according to an embodiment of the present invention.
FIG. 5 illustrates a battery module according to a first embodiment of the present invention.
FIG. 6 illustrates a battery module according to a second embodiment of the present invention.
FIG. 7 illustrates a battery module according to a third embodiment of the present invention.
FIG. 8 illustrates a battery device including a battery module according to an embodiment of the present invention.
FIG. 9 illustrates an arrangement of heterogeneous battery cells in a battery module according to another embodiment of the present invention.
FIG. 10 illustrates an arrangement of heterogeneous battery cells in a battery module according to another embodiment of the present invention.

### [DETAILED DESCRIPTION OF THE PREFERRED EMBODIMENTS]

The above-described objects, means and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

Hereinafter, a battery module and a battery device including the same according to embodiments are disclosed.

Before describing the battery module and the battery device including the same according to the embodiments, the terms used herein are defined.

Herein, heterogeneous battery cells may be defined as battery cells of different types having different thermal characteristics and battery performance. Homogeneous battery cells may be defined as battery cells of the same type having the same thermal characteristics and battery performance. Here, the thermal characteristics of the battery cell may include heat generation during the operation of the cell and thermal conductivity between cells. The battery performance may include the operating range and battery capacity.

The heat dissipation of the battery cell is facilitated at the periphery of the battery module rather than at the center of the battery module such that the battery cell located at the center of the battery module is at a higher temperature than the battery cell located at the periphery. Accordingly, a difference in the operating temperature may be present depending on the locations of the battery cells, which may affect the performance and degradation (or lifespan) of the cell, resulting in a deviation between the battery cells.

In the battery device according to the embodiments of the present invention, heterogeneous battery cells are arranged to minimize thermal deviation within a battery module, thereby preventing thermal propagation between battery cells with high thermal stability.

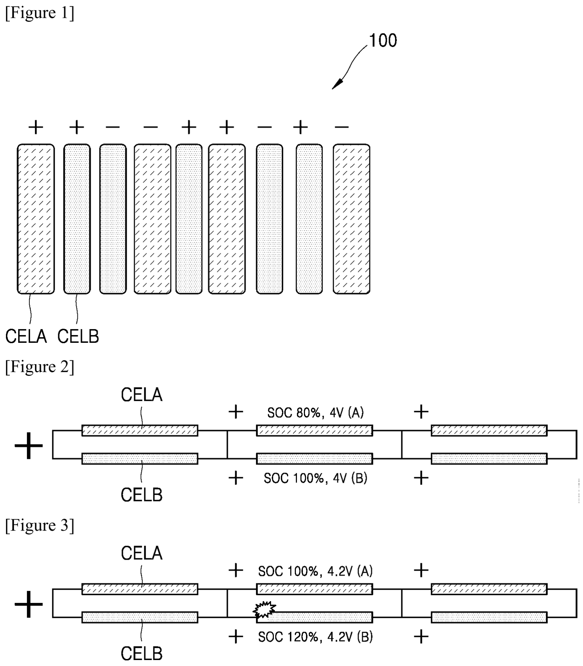

FIG. 1 illustrates an arrangement of heterogeneous battery cells in a battery module according to an embodiment of the present invention.

Referring to FIG. 1, a battery module 100 according to an embodiment includes first type battery cells CELA and second type battery cells CELB.

The first type battery cells CELA and the second type battery cells CELB may have different thermal characteristics and different battery performances. For example, the first type battery cells CELA may be better in battery performance than the second type battery cells CELB, but may be worse in heat generation and thermal conductivity characteristics. Alternatively, conversely, the second type battery cells CELB may be better in battery performance than the first type battery cells CELA, but may be worse in heat generation and thermal conductivity characteristics.

Here, the difference in thermal characteristics between the first and second types of battery cells CELA and CELB may mean that at least one of the heat generation level and thermal conductivity is different between the first and second types of battery cells CELA and CELB when the battery is charged and discharged for the same time period. In addition, the different battery performance between the first and second types of battery cells CELA and CELB may mean that difference exists in at least one of: the time required for charging and discharging; the operating range (or voltage range) of the charge and discharge; and the battery capacity between the first and second types of battery cells CELA and CELB.

In the battery module 100, the first type battery cells CELA and the second type battery cells CELB are irregularly and alternately arranged such that the temperature difference according to locations within the battery module 100 is minimized based on the thermal characteristics according to type of the battery cells.

As an example of arranging irregularly and alternately, at least one second type battery cell CELB is arranged in the center, at least one first type battery cell CELA is arranged at two sides of at least one second type battery cell CELB in the center, and at least one second type battery cell CELB is arranged next to the at least one first type battery cell CELA. Here, the number of heterogeneous cells may be the same or different. In addition, the first type battery cell CELA and the second type battery cell CELB may be positive (+) or negative (-) cells. In addition, at least one of the first type battery cell CELA and the second type battery cell CELB may be used as a connector terminal CNT.

As another example of arranging irregularly and alternately, at least one first type battery cell CELA is arranged in the center, at least one second type battery cell CELB is arranged at two sides of at least one first type battery cell CELA in the center, and at least one first type battery cell CELA is arranged next to the at least one second type battery cell CELB. Here, the number of heterogeneous cells may be the same or different. In addition, the first type battery cell CELA and the second type battery cell CELB may be positive (+) or negative (-) cells. In addition, at least one of the first type battery cell CELA and the second type battery cell CELB may be used as a connector terminal CNT.

As an example, in the battery module 100, at least one second type battery cell CELB and at least one first type battery cell CELA may be arranged irregularly and alternately at two sides of one of the first type battery cells CELA in the center.

As another example, in the battery module 100, at least one first type battery cell CELA and at least one second type battery cell CELB may be arranged irregularly and alternately at two sides of one of the second type battery cells CELB in the center.

For example, as shown in FIG. 1, in the battery module 100, one first type battery cell CELA may be arranged at two sides of one second type battery cell CELB in the center, two second type battery cells CELB may be arranged next, and one first type battery cell CELA may be arranged next. Here, the first type battery cell CELA and the second type battery cell CELB may be positive (+) or negative (-) cells.

As described above, the battery device according to the embodiments of the present invention does not have a structure in which heterogeneous battery cells CELA and CELB are simply alternately arranged within the battery module 100, but has a structure in which heterogeneous battery cells CELA and CELB are irregularly arranged within the battery module 100 to secure temperature uniformity of the battery module 100 by considering thermal characteristics, i.e., heat generation and heat conduction of the cell, depending on the type of heterogeneous battery cells CELA and CELB. This structure minimizes temperature deviation depending on the positions within the battery module 100.

In addition, the battery device according to the embodiments of the present invention has a structure in which homogeneous battery cells CELA or CELB are electrically connected within the battery module 100 and heterogeneous battery cells CELA and CELB are connected independent from each other within the battery module 100. This structure may reduce performance and lifespan deviations between battery cells.

The battery module 100 having the above-described structure and the battery device including the same will be described in more detail hereinafter.

FIG. 2 illustrates a battery module operating based on B-type battery cells having operation range smaller than A-type battery cells. FIG. 3 illustrates a battery module operating based on A-type battery cells having operation range greater than B-type battery cells.

When heterogeneous battery cells are connected in series and in parallel within the battery module 100, stability problems may occur due to voltage deviations between heterogeneous battery cells with different operating ranges, and available energy may be limited.

FIGS. 2 and 3 illustrate A-type battery cell CELA operating in range of 0V to 4.2V, and B-type battery cell CELB operating in range of 0V to 4.0V.

Here, when full charging is performed with respect to the B-type battery cell CELB, as shown in FIG. 2, the B-type battery cell CELB is charged to 100% whereas the A-type battery cell CELA is charged only 80%. That is, since the battery device has limited available energy, the battery performance may be downgraded to the level of the B-type battery cell CELB with lower battery performance.

In addition, when full charging is performed with respect to the A-type battery cell CELA, as shown in FIG. 3, the A-type battery cell CELA is charged to 100% whereas the B-type battery cell CELB may be charged to 120%. That is, the B type battery cell CELB may have stability problems due to overcharge.

Therefore, the battery device disclosed herein is to maximize the available energy of the battery device while minimizing the temperature deviation within the battery module.

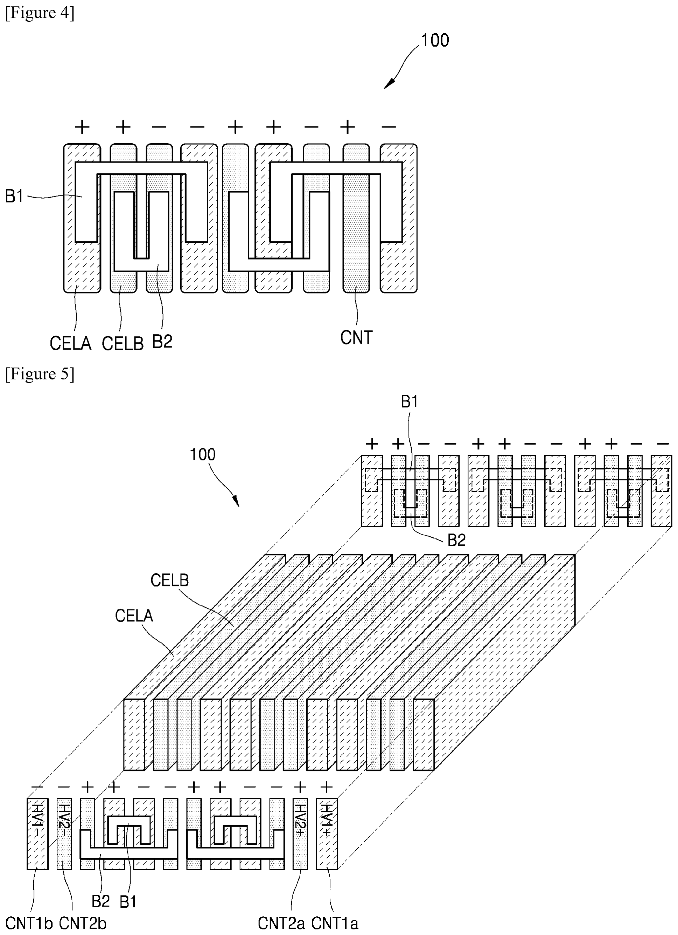

FIG. 4 illustrates arrangement and electrical connection relationship of heterogeneous battery cells in a battery module according to an embodiment of the present invention.

Referring to FIG. 4, the battery module 100 includes: first type battery cells CELA; second type battery cells CELB; a first bus bar B1; and a second bus bar B2.

The first type battery cells CELA and the second type battery cells CELB may be arranged within the battery module 100 such that the temperature difference according to locations within the battery module 100 is minimized based on the thermal characteristics of the heterogeneous battery cells CELA and CELB.

The first bus bar B1 may electrically connect the first type battery cells CELA, and the second bus bar B2 may electrically connect the second type battery cells CELB. For example, the first bus bar B1 may be used to connect the first type battery cells CELA in series, and the second bus bar B2 may be used to connect the second type battery cells CELB in series.

Each of the first bus bar B1 and the second bus bar B2 may connect the homogeneous battery cells in series such that the first type battery cells CELA and the second type battery cells CELB are not electrically connected to each other. That is, the heterogeneous battery cells CELA and CELB may be connected independent from each other via the first bus bar B1 and the second bus bar B2 within the battery module 100 and may be independently charged or discharged.

For example, the first type battery cell CELA and the second type battery cell CELB may be positive (+) or negative (-) cells. The positive first type battery cell CELA and the negative first type battery cell CELA may be arranged on the right side and the left side of the positive second type battery cell CELB in the center, respectively. Negative and positive second type battery cells CELB may be arranged next to the negative first type battery cell CELA, and negative and positive second type battery cells CELB may be arranged next to the positive first type battery cell CELA. The positive first type battery cell CELA may be arranged next to the positive second type battery cells CELB, and the negative first type battery cell CELA may be arranged next to the positive second type battery cells CELB.

The first bus bar B1 may electrically connect positive and negative first type battery cells CELA, and the second bus bar B2 may electrically connect positive and negative second type battery cells CELB.

At least one of the first type battery cells CELA and the second type battery cells CELB may be used as a connector terminal CNT for electrical connection with another battery module.

While only one connector is shown in FIG. 4, the number of connectors is not limited thereto. At least one connector terminal CNT may be provided for each of the first type battery cells CELA and the second type battery cells CELB.

In addition, the first bus bar B1 and the second bus bar B2 do not overlap with each other when connecting battery cells of the same type. For example, the first bus bar B1 and the second bus bar B2 may have " 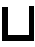 " or " 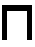 " shape.

Here, among " 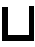 " and " 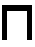 " shapes, the x-axis member may be defined as a member connecting the battery cells, and the y-axis member may be defined as a member electrically connected to the battery cell and the lead (or contact point). The width of the y-axis member may be greater than that of the x-axis member, and the width of the y-axis member may be changed according to the size of the lead of the battery cell.

In addition, the shape and size of the first bus bar B1 and the second bus bar B2 may be changed according to the lead position of types of the battery cells.

When connecting non-adjacent battery cells, the first bus bar B1 and the second bus bar B2 have an open upper portion and an open lower portion such as " 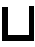 " and " 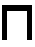 "shapes so as to enable a long distance connection within the same width.

For example, a lead of first type battery cell may be connected to the upper portion of the y-axis member of the first bus bar B1, and a lead of second type battery cell may be connected to the lower portion of the y-axis member of the second bus bar B2.

As another example, the first bus bar B1 and the second bus bar B2 may be formed in a "W" or "M" shape for connecting three battery cells of the same type. When connecting non-adjacent battery cells of the same type, the first bus bar B1 and the second bus bar B2 may be have a "W" or "M" shape with at least one of the upper and lower portions open so as to avoid overlapping with each other and enable long-distance connection.

In addition, in the embodiments of the present invention, the locations of the lead in contact with bus bars of each type of battery cells may differ for the front and rear sides of the battery cells. For example, the locations of the leads of the first type battery cells CELA may be higher or lower than those of the leads of the second type battery cells CELB. In such case, since the locations of the leads of the first bus bar B1 and the second bus bar B2 differ depending on the types of the battery cells, the shape of the bus bars does not limit the locations and the bus bars may have various shapes.

In addition, while two types of the battery cells are exemplified in the embodiments, the types of the battery cells are not limited thereto. Three or more types of battery cells, i.e., battery cells with three or more different thermal characteristics, may be placed within the battery module based on the thermal characteristics of each type.

FIG. 5 illustrates a battery module according to a first embodiment of the present invention.

Referring to FIG. 5, a battery module 100 according to the first embodiment includes: first type battery cells CELA; second type battery cells CELB; a first bus bar B1; and a second bus bar B2. Here, the first type battery cell CELA and the second type battery cell CELB may be positive (+) or negative (-) cells.

As shown in FIG. 5, in the battery module 100, positive and negative first type battery cells CELA may be arranged on the right side and the left side of positive and negative second type battery cells CELB in the center, respectively. Negative and positive second type battery cells CELB may be arranged next to the positive and negative first type battery cells CELA, respectively. Positive first type battery cell CELA may be arranged next to the positive second type battery cell CELB, and negative first type battery cell CELA may be arranged next to the negative second type battery cell CELB.

The first bus bar B1 may electrically connect positive and negative first type battery cells CELA. For example, the first bus bar B1 may connect two first type battery cells CELA in series independent from the second type battery cells CELB on at least one of the front side and the rear side of the battery module 100.

The second bus bar B2 may electrically connect positive and negative second type battery cells CELB. For example, the second bus bar B2 may connect two second type battery cells CELB in series independent from the first type battery cells CELA on at least one of the front side and the rear side of the battery module 100.

At least one connector terminal may be connected to at least one of the first type battery cells CELA and the second type battery cells CELB for electrical connection to another battery module.

For example, first connector terminals CNT1a and CNT1b may be provided on the front side of the outermost first type battery cells CELA in the battery module 100, respectively. Here, voltages within the first voltage ranges HV1+ and HV1- may be applied to the first connector terminals CNT1a and CNT1b, respectively.

In addition, second connector terminals CNT2a and CNT2b may be provided on the front side of the outermost second type battery cells CELB in the battery module 100, respectively. Here, voltages within the second voltage ranges HV2+ and HV2- may be applied to the second connector terminals CNT2a and CNT2b, respectively.

As described above, the first connector terminals CNT1a and CNT1b as input/output terminals of the first type battery cells CELA and the second connector terminals CNT2a and CNT2b as input/output terminals of the second type battery cells CELB may be electrically connected to another battery module independent from each other by different types.

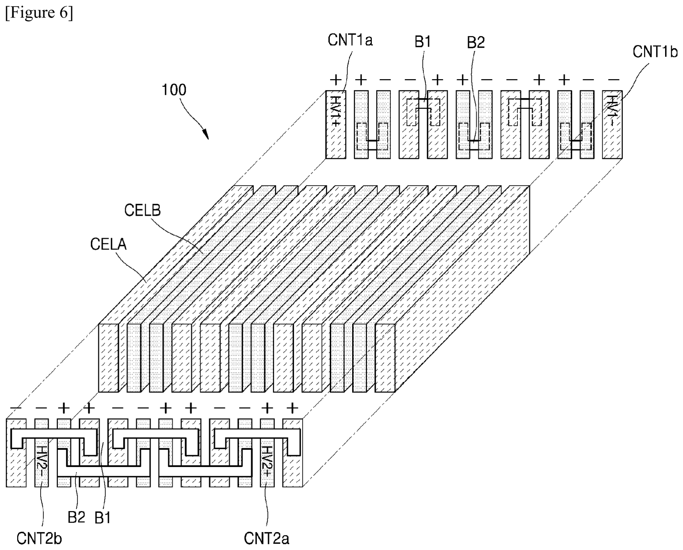

FIG. 6 illustrates a battery module according to a second embodiment of the present invention.

Referring to FIG. 6, the battery module 100 according to the second embodiment includes: first type battery cells CELA; second type battery cells CELB; a first bus bar B1; and a second bus bar B2. For reference, the battery module 100 illustrated in FIG. 6 may have a different structure in terms of the locations of the connector terminals compared to FIG. 5.

As shown in FIG. 6, in the battery module 100, positive and negative first type battery cells CELA may be arranged on the right side and the left side of positive and negative second type battery cells CELB in the center, respectively. Negative and positive second type battery cells CELB may be arranged next to the positive and negative first type battery cells CELA, respectively. Positive first type battery cell CELA may be arranged next to the positive second type battery cell CELB, and negative first type battery cell CELA may be arranged next to the negative second type battery cell CELB.

The first bus bar B1 may electrically connect positive and negative first type battery cells CELA. For example, the first bus bar B1 may connect two first type battery cells CELA in series independent from the second type battery cells CELB on at least one of the front side and the rear side of the battery module 100.

The second bus bar B2 may electrically connect positive and negative second type battery cells CELB. For example, the second bus bar B2 may connect two second type battery cells CELB in series independent from the first type battery cells CELA on at least one of the front side and the rear side of the battery module 100.

At least one connector terminal may be connected to at least one of the first type battery cells CELA and the second type battery cells CELB for electrical connection to another battery module.

For example, first connector terminals CNT1a and CNT1b may be provided on the rear side of the outermost first type battery cells CELA in the battery module 100, respectively. Here, voltages within the first voltage ranges HV1+ and HV1- may be applied to the first connector terminals CNT1a and CNT1b, respectively.

In addition, second connector terminals CNT2a and CNT2b may be provided on the front side of the outermost second type battery cells CELB in the battery module 100, respectively. Here, voltages within the second voltage ranges HV2+ and HV2- may be applied to the second connector terminals CNT2a and CNT2b, respectively.

As described above, the first connector terminals CNT1a and CNT1b may be provided on the rear side of the first type battery cells CELA and the second connector terminals CNT2a and CNT2b may be provided on the front side of the second type battery cells CELB.

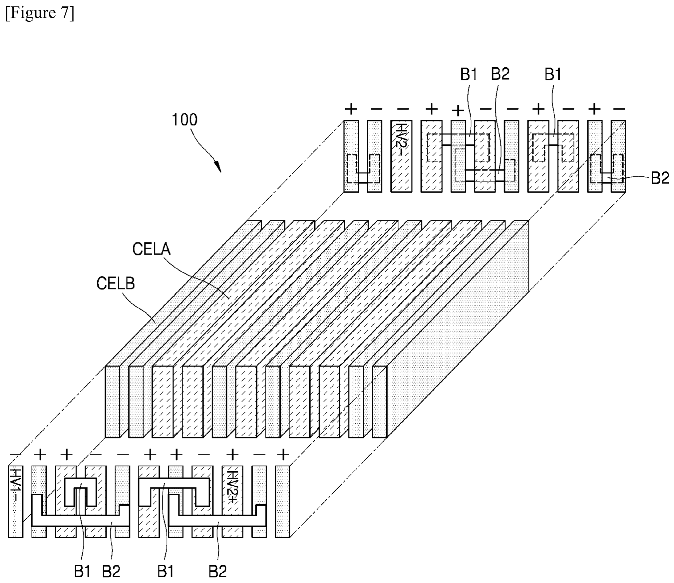

FIG. 7 illustrates a battery module according to a third embodiment of the present invention.

Referring to FIG. 7, the battery module 100 according to the third embodiment includes: the first type battery cells CELA; the second type battery cells CELB; the first bus bar B1; and the second bus bar B2. For reference, the battery module 100 illustrated in FIG. 7 may have a different structure in terms of the arrangement of the first type battery cells CELA, the second type battery cells CELB and the locations of the connectors compared to FIGS. 5 and 6.

As shown in FIG. 7, in the battery module 100, positive and negative second type battery cells CELB may be arranged on the right side and the left side of one positive first type battery cells CELA in the center, respectively. Positive and negative first type battery cells CELA may be arranged next to the positive and negative second type battery cells CELB, respectively. Negative and positive second type battery cells CELB may be arranged next to the positive first type battery cell CELA, and positive and negative second type battery cells CELB may be arranged next to the positive first type battery cell CELA.

The first bus bar B1 may electrically connect positive and negative first type battery cells CELA. For example, the first bus bar B1 may connect two first type battery cells CELA in series independent from the second type battery cells CELB on at least one of the front side and the rear side of the battery module 100.

The second bus bar B2 may electrically connect positive and negative second type battery cells CELB. For example, the second bus bar B2 may connect two second type battery cells CELB in series independent from the first type battery cells CELA on at least one of the front side and the rear side of the battery module 100.

At least one connector terminal may be connected to at least one of the first type battery cells CELA and the second type battery cells CELB for electrical connection to another battery module.

For example, the positive and negative first connector terminals CNT1a and CNT1b may be located on the front side of the first type battery cells CELA, the negative second connector terminal CNT2b may be located on the front side of the second type battery cells CELB, and the negative second connector terminal CNT2b may be located on the rear side of the second type battery cells CELB.

As described above, the locations where the first connector terminals CNT1a and CNT1b and the second connector terminals CNT2a and CNT2b are arranged may change depending on the design or layout of the battery module 100.

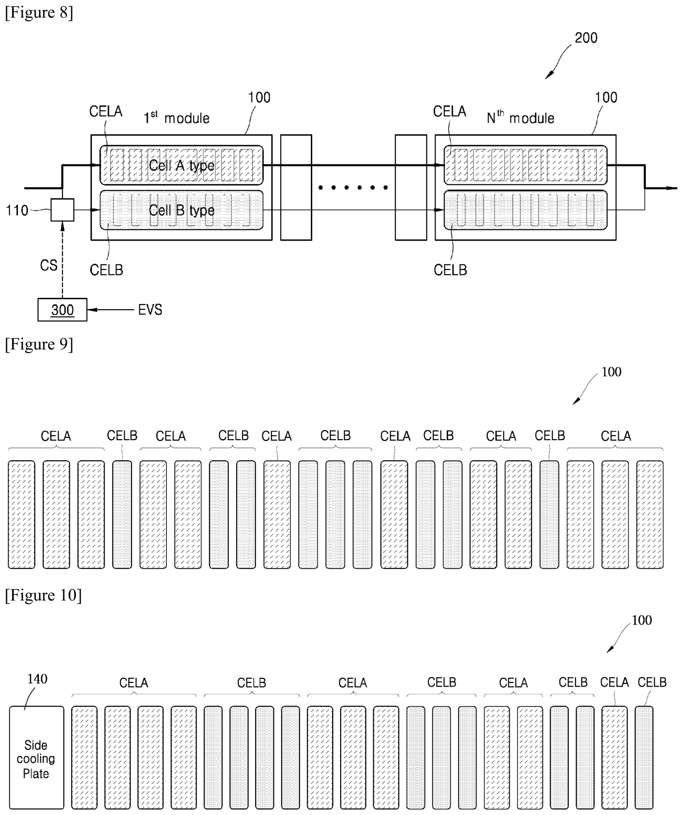

FIG. 8 illustrates a battery device including a battery module according to an embodiment of the present invention.

Referring to FIG. 8, a battery device 200 according to an embodiment includes: first to n^{th} battery modules 100; a relay 110; and a controller 300.

Each of the first to n^{th} battery modules 100 may include first type battery cells CELA and second type battery cells CELB having thermal characteristics different from the first type battery cells CELA. The first type battery cells CELA and the second type battery cells CELB may be electrically connected independent from each other in the first to n^{th} battery modules 100.

The first type battery cells CELA and the second type battery cells CELB may be connected in series independent from each other within and between modules of the first to n^{th} battery modules 100.

The relay 110 may selectively connect the first type battery cells CELA and the second type battery cells CELB of the first to n^{th} battery modules 100 in parallel. For example, the relay 110 may establish a parallel connection between the first type battery cells CELA and the second type battery cells CELB of the first to n^{th} battery modules 100 or sever the parallel connection according to the control signal CS.

As described above, the parallel connection between the heterogeneous battery cells may be established at the system level of the battery device, and may be severed according to the operating status.

The controller 300 may output a control signal CS to the relay to control the relay according to an event signal EVS. For example, the event signal EVS may be a sensing signal representing a charging voltage of the second type battery cells CELB.

Assuming that the first type battery cells CELA has a greater operating voltage range than the second type battery cells CELB, the controller 300 may compare the level of the charging voltage of the second type battery cells CELB with a reference value based on the sensing signal received from a sensor (not shown), and when the level of the charging voltage of the second type battery cells CELB reaches the reference value as a result of the comparison, the relay 110 may be de-energized.

Through this, the second type battery cells CELB may be prevented from being overcharged. In addition, since the charging operation is performed based on the first type battery cells CELA having a greater operating voltage range than the second type battery cells CELB, the available energy of the battery device 200 may be fully utilized.

As described above, the battery device does not require design constraints for maintaining balance within the battery module, and the performance thereof may be maintained due to the separated structure thereof.

The first type battery cells CELA and the second type battery cells CELB may be arranged irregularly and alternately such that the temperature difference according to locations within the first to n^{th} battery modules 100 is minimized based on thermal characteristics, as shown in FIGS. 4 to 7.

The first type battery cells CELA and the second type battery cells CELB may be arranged irregularly and alternately with at least one second type battery cell and at least one first type battery cell in the center.

In addition, the first type battery cells CELA may be electrically connected to each other independent from the second type battery cells CELB via the first bus bar B1 on at least one of the front side and the rear side of the first to n^{th} battery modules 100.

In addition, the second type battery cells CELB may be electrically connected to each other independent from the first type battery cells CELA via the second bus bar B2 on at least one of the front side and the rear side of the first to n^{th} battery modules 100.

In addition, within the first to n^{th} battery modules 100, the first type battery cells CELA of the same type may be connected in series independent from the second type battery cells CELB, the second type battery cells CELB of the same type may be connected in series independent from the first type battery cells CELA.

In addition, the first type battery cells CELA and the second type battery cells CELB of different types of battery cells may not be electrically connected within the first to n^{th} battery modules 100. In addition, the first type battery cells CELA and the second type battery cells CELB may be independently charged and discharged within one battery module 100.

In addition, at least one first connector may be provided on at least one of the front side and the rear side of the first type battery cells CELA, and at least one second connector may be provided on at least one of the front side and the rear side of the second type battery cells CELB. Here, the first connector may be used to electrically connect the first type battery cells CELA to the first type battery cells CELA of another battery module, and the second connector may be used to electrically connect the second type battery cells CELB to the second type battery cells CELB of another battery module.

Even when the battery cells in a module or pack are the same cells, the heat generation effect may be different depending on the location thereof and the location of the surrounding cooling device. For example, the temperature of the center cell in a module may be higher than that of the outer cells.

According to the present invention, when configuring a battery module by mixing LFP (lithium, iron, phosphate) series battery cells or NCM (nickel, cobalt, manganese) series battery cells with different thermal characteristics, the cells are arranged based on the thermal characteristics of the battery cells to minimize the temperature deviation according to locations within the module 100.

In addition, even among battery cells of the same series, cells with different thicknesses may have different heat conduction paths and thus different heat generation characteristics. In the case of heterogeneous series, the amount of heat generated is different depending on the type of active material, especially the anode material (LFP, NCM, single crystal, LMO) such that there are cells with small heat generation and cells with large heat generation. Herein, different thermal characteristics may mean cells with different amounts of heat generation.

FIG. 9 illustrates an arrangement of heterogeneous battery cells in a battery module according to another embodiment of the present invention.

As shown in FIG. 9, the first type battery cell CELA and the second type battery cell CELB may be placed in the module 100. Here, a cell that generates more heat is exemplified as the first type battery cell CELA. In addition, the first type battery cell CELA may be thicker than the second type battery cell CELB.

The second type battery cells CELB, which generate less heat than the first type battery cells CELA, may be placed in the center of the module 100, and the first type battery cells CELA may be placed at left and right sides of the second type battery cells CELB, and the second type battery cell CELB may be placed next to the first type battery cells CELA.

For example, three second type battery cells CELB may be arranged in the center of the module 100, one first type battery cell CELA may be arranged at each of the left and right sides of the three second type battery cells CELB, two second type battery cells CELB may be arranged at each of the left and right sides of the one first type battery cell CELA, two first type battery cells CELA may be arranged at each of the left and right sides of the two second type battery cells CELB, one second type battery cell CELB may be arranged at each of the left and right sides of the two first type battery cells CELA, and three first type battery cells CELA may be arranged at each of the left and right sides of the one second type battery cell CELB.

FIG. 10 illustrates an arrangement of heterogeneous battery cells in a battery module according to another embodiment of the present invention.

As shown in FIG. 10, based on the location of the cooling device, the first type battery cells CELA and the second type battery cells CELB may be placed within the module 100. Here, a cell that generates more heat is exemplified as the first type battery cell CELA. In addition, the first type battery cell CELA may be thicker than the second type battery cell CELB.

For example, when the cooling plate 140 is provided at the left side of the battery module 100, four first type battery cells CELA may be placed closest to the cooling plate 140 within the battery module 100, four second type battery cells CELB may be placed next to the four first type battery cells CELA, three first type battery cells CELA may be placed next to the four second type battery cells CELB, three second type battery cells CELB may be placed next to the three first type battery cells CELA, two first type battery cells CELA may be placed next to the three second type battery cells CELB, two second type battery cells CELB may be placed next to the two first type battery cells CELA, one first type battery cell CELA may be arranged next to two second type battery cells CELB, and one second type battery cell CELB may be arranged next to the one first type battery cell CELA.

As described above, in the battery device according to the embodiments of the present invention, heterogeneous battery cells CELA and CELB are arranged within the battery module 100 considering the thermal characteristics thereof, that is, considering the heat generation and heat conduction of the cells according to the type such that the temperature uniformity of the battery module 100 may be secured, and as a result, the temperature deviation according to locations within the battery module 100 may be minimized.

As described above, according to the embodiments of the present invention, the temperature deviation according to locations within the battery module may be minimized by arranging heterogeneous battery cells within the battery module based on the thermal characteristics thereof.

In addition, by connecting homogeneous battery cells among the battery cells placed in the battery module and operating heterogeneous battery cells independently, the performance and lifespan deviations between battery cells may be reduced.

In addition, by minimizing the thermal deviation between battery cells, the accumulation of heat at a specific location within the battery module may be minimized.

In addition, the thermal distribution between battery cells may be uniform such that the thermal propagation between battery cells may be uniform.

In addition, by minimizing the temperature deviation according to locations within the battery module and minimizing the accumulation of heat at a specific location, the thermal runaway phenomenon of a specific battery cell may be prevented.

In addition, since the operating temperatures of the battery cells are similar such that the degradation tendencies thereof are similar, the characteristic deviations between battery cells over time may be minimized.

In addition, by electrically connecting homogeneous battery cells using "U" and "∩" shaped bus bars, the double structure may be avoided when bus bars extend across heterogeneous battery cells, thereby avoiding space loss.

In addition, by avoiding connection in series between heterogeneous cells, energy loss due to variation between battery cells in a battery device may be minimized.

In addition, since heterogeneous battery cells with different operating voltage ranges or different energies may be electrically connected and utilized as a battery device, the available energy of the battery device may be maximized.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module, comprising:
first type battery cells; and
second type battery cells having thermal characteristics different from thermal characteristics of the first type battery cells,
wherein the first type battery cells and the second type battery cells are arranged irregularly and alternately based on the thermal characteristics such that temperature difference according to locations within the battery module is minimized.

2. The battery module of claim 1, wherein at least one second type battery cell and at least one first type battery cell are arranged irregularly and alternately on two sides of at least one of the first type battery cells.

3. The battery module of claim 1, wherein at least one second type battery cell and at least one first type battery cell are arranged irregularly and alternately on two sides of at least one of the second type battery cells.

4. The battery module of claim 1, wherein the first type battery cells are electrically connected to each other via a first bus bar independent from the second type battery cells on at least one of a front side and a rear side of the battery module, and
the second type battery cells are electrically connected to each other via a second bus bar independent from the first type battery cells on at least one of a front side and a rear side of the battery module.

5. The battery module of claim 4, wherein the first type battery cells are connected in series within the battery module independent from the second type battery cells and the second type battery cells are connected in series within the battery module independent from the first type battery cells.

6. The battery module of claim 5, wherein the first type battery cells are not connected to the second type battery cells within the battery module and independently charged and discharged.

7. The battery module of claim 4, wherein at least one first connector is provided on at least one of the front side and the rear side of the first type battery cells.

8. The battery module of claim 7, wherein at least one second connector is provided on at least one of the front side and the rear side of the second type battery cells.

9. The battery module of claim 8, wherein the first connector is electrically connected to first type battery cells of another battery module, and the second connector is electrically connected to second type battery cells of the another battery module.

10. The battery module of claim 4, wherein each of the first bus bar and the second bus bar has " 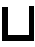 " or " 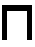 " shape such that the first bus bar and the second bus bar do not overlap each other when connecting same type battery cells.

11. A battery device, comprising:
first to n^{th} battery modules,
wherein each of the first to n^{th} battery modules is provided with first type battery cells and second type battery cells having thermal characteristics different from the first type battery cells, and
the first type battery cells are electrically connected to each other independent from the second type battery cells and the second type battery cells are electrically connected to each other independent from the first type battery cells in the first to n^{th} battery modules.

12. The battery device of claim 11, wherein the first type battery cells are connected to each other in series within and between the first to n^{th} battery modules independent from the second type battery cells, and the second type battery cells are connected to each other in series within and between the first to n^{th} battery modules independent from the first type battery cells.

13. The battery device of claim 11, further comprising: a relay selectively connecting the first type battery cells and the second type battery cells of the first to n^{th} battery modules in parallel.

14. The battery device of claim 13, further comprising: a controller controlling the relay, wherein the controller selectively drives the relay according to an event signal.

15. The battery device of claim 11, wherein the first type battery cells and the second type battery cells are arranged irregularly and alternately based on the thermal characteristics such that temperature difference according to locations within the first to n^{th} battery module is minimized.

16. The battery device of claim 15, wherein at least one second type battery cell and at least one first type battery cell are arranged irregularly and alternately on two sides of at least one of the first type battery cells.

17. The battery device of claim 11, wherein the first type battery cells are electrically connected to each other via a first bus bar independent from the second type battery cells on at least one of a front side and a rear side of the first to n^{th} battery modules, and
the second type battery cells are electrically connected to each other via a second bus bar independent from the first type battery cells on at least one of a front side and a rear side of the first to n^{th} battery modules.

18. The battery device of claim 17, wherein the first type battery cells are connected in series within the first to n^{th} battery modules independent from the second type battery cells and the second type battery cells are connected in series within the first to n^{th} battery modules independent from the first type battery cells.

19. The battery device of claim 18, wherein the first type battery cells are not connected to the second type battery cells within the first to n^{th} battery modules and independently charged and discharged.

20. The battery device of claim 17, wherein at least one first connector is provided on at least one of the front side and the rear side of the first type battery cells,
at least one second connector is provided on at least one of the front side and the rear side of the second type battery cells, and
the first connector is electrically connected to first type battery cells of another battery module, and the second connector is electrically connected to second type battery cells of the another battery module.
